# EUROPEAN PATENT APPLICATION

(11) **EP 1 217 479 A2**
(43) Date of publication of application: **26.06.2002**
(21) Application number: 01129959.1
(22) Date of filing: 17.12.2001
(51) Int. Cl.: G05B 19/18

(54) **Loader control unit**

(30) Priority: 19.12.2000 JP 2000385332
(71) Applicant: Murata Kikai Kabushiki Kaisha, Minami-ku, Kyoto-shi, Kyoto 601 (JP)
(72) Inventor: Yoshikawa, Shinji, Inuyama-shi, Aichi (JP)
(74) Representative: Liedl, Christine

(57) **Abstract**

The abnormal operation and the transferring failure etc. of a loader (5) caused by the core gap are prevented form occuring in transferring a work (W) to the chuck (2) of the outer device by control unit 20 of the loader (5) passing the work (W) to the chuck (2) of the outer device (1). When the chuck (2) of the outer device (1) is closed after the loader chuck (13) is moved to a work passing position, a constraint releasing means (31) releasing the loader (2) from a constraint condition by servomotors (11, 12) is provided. This constraint release is designed to be conducted in case that the torque of servomotors (11, 12) exceeds a set value. Moreover, an adjustment means (32) is provided, which detects a tracking movement position of the loader chuck (14) by the constraint release and adjusts the work passing position of the next cycle (Fig. 1).

## Description

### Field of the Invention

The present invention relates to a loader control unit, which controls the loader that the transfer of the work is done to the outer machine of the machine tools etc.

### Background of the Invention

According to the automatic machine tools like NC lathe, the loader is annexed to the main body of the machine tools and the transporting in-and-out of the work is designed to be conducted automatically. The loader like the gantry loader has some important positioning locations in operating series of cycles. For example;
1. the loading / unloading position to the main spindle chuck
2. the loading / unloading position to the work turning machine
3. the transferring position with the other conveying unit

Normally, the setting of these positions is done by the expert operator by the work called "teaching" and it is treated as the fixed position in mass production.

However, in mass production, since various changes of the states like the mechanical backlash, the abrasion of the mechanical component and the change of the material variation are happened, the positioning sometimes does not go well even if it is forced to be positioned to the location using the fixed value. For example, there is a possibility that the defective is made by starting the process with remaining in the impossible position and the work is departed from the chuck etc. during the process in some cases, which is conductive to the trouble and the accident. The trouble is prevented from occurring before happens by stopping by the abnormal load alarm of the loader spindle at times, however the problem of the declination of the operating rate may be produced.

It is an object of the present invention to provide a loader control unit which can prevent from occurring the abnormal operation and the transferring failure etc. of the loader caused by the core gap of the chuck in transferring the work to the chuck of the outer device.

It is a further object of the present invention that the loader chuck is arranged to be moved to the correct position in transferring the work from the next time.

It is another object of the present invention that the adjustment of the work transferring position can be done easily only by changing the coordinate.

### Summary of the Invention

The loader control unit of the present invention is a loader control unit 20 which controls a loader 5 passing the work W to a chuck 2 of an outer device 1 is provided with a position control means 25∼27 moving a loader chuck 14 to the work passing position and a constraint releasing means 31 which controls the loader 5 such as to release from the constraint condition by motors 11, 12 before or after closing the chuck 2 of the above outer device 1 after moving the loader chuck 14 to the work passing position.

According to this composition, the loader chuck 14 is positioned to the work passing position taught in advance to the chuck 2 of the outer device 1 and the work W is passed. Then, the constraint releasing means 31 is controlled such as to release the loader 5 from the constraint condition by the motors 11, 12 before or after closing the chuck 2 of the outer device 1 completely. For example, the constraint releasing means 31 checks each spindle torque of the loader 5 when closing the chuck 2 of the outer device 1, which the loader 5 is released from the constraint condition by the motors 11, 12 if the generating torque exceeds the set value. The release from this constraint condition can be the limiting torque condition, and the motors 11, 12 can be turned off completely. The loader 5 is released from the constraint condition by the motors 11, 12, so that the loader chuck 14 is tracked and moved, namely copied after to the constraint condition by the chuck 2 of the outer device 1. Therefore, the abnormal operation and the transferring failure etc. of the loader 5 caused by the core gap of the chucks 2, 14 are prevented from occurring. Additionally, the outer device 1 described here is the different unit from the loader 5, for example it can be a part other than the loader in the machine tool in case that the loader 5 is built-in the machine tools like lathe. The chuck 2 of the outer device 1 means the chuck of the unit that the work W is passed from the loader 5.

According to the present invention, the loader chuck 14 detects the tracking movement position by that the chuck 2 of the above outer device 1 grabs the work W grasped by the loader chuck 14, so that an adjustment means 32 adjusting the work passing position of the next cycle by the above position control means 25, 26 can be provided according to the tracking movement position.

Since the loader chuck 14 detects the tracking movement position and adjusts the work passing position of the next cycle according to the position like this, the positioning from the next cycle is done in the suitable location and the positioning to the suitable location can be always done.

According to the present invention, the above loader 5 is operated by the coordinate data of the work passing position specified by a loader program 21, which the above coordinate data can be rewritten based on the detection value of the above tracking movement position or the adjustment of the above work passing position can be done by adding the augmenter. The specification of the work passing position by the loader program 21 is done by the identification code ①,②, ··· of the work passing position, so that the coordinate data corresponding to the identification code can be memorized in a positioning location setting means 23 or the work passing position can be specified directly by the coordinate data in the loader program 21.

In any case, the adjustment of the above work passing position can be easily done by rewriting the coordinate data or by adding the augmenter based on the detection tracked and moved by the loader chuck 14. If the coordinate data is memorized in the positioning location setting means 23, the renewal of the coordinate data based on the detecting position is arranged to be done by rewriting the memorizing coordinate data itself, for example. If the coordinate data is described in the work program 21, the coordinate data of the work program 21 is arranged to be rewritten, for example. If the augmenter is added based on the detecting position, the augmenter is added in outputting the operating command by the coordinate data set in the positioning location setting means 23 or the work program 21, for example.

### Brief Description of the Drawings

Figure 1 is a block diagram showing the conceptual framework of the loader control unit in an embodiment of the present invention.
Figure 2 is a perspective view showing an example of the outer device and the loader.
Figure 3 is a rupture side view of the loader.
Figure 4 is an explanatory drawing of the displacement of the outer device chuck and the loader chuck.
Figure 5 is a block diagram showing the conceptual framework of the loader control unit in a further embodiment of the present invention.

### Detailed Description of the Invention

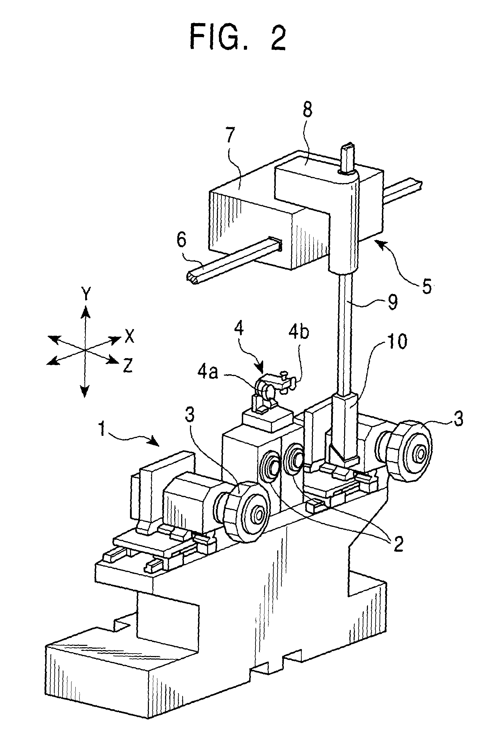

An embodiment of the present invention will be described with reference to the drawings. Figure 2 is a perspective diagram showing an example of a machine tool that is a loader and an outer device applied the present invention. An outer device 1 is a turret type twin spindle lathe, which is equipped with two pairs of a main spindle chuck 2 and a turret type tool rest 3 and has a work turning unit 4. The work turning unit 4 having two reversing unit chucks 4a, 4b can change the work grasped by one reversing unit chuck 4a by reversing both sides of the other reversing unit chuck 4b. The respective reversing unit chucks 4a, 4b is positioned in the upper side of the corresponding main spindle chucks 2, 2.

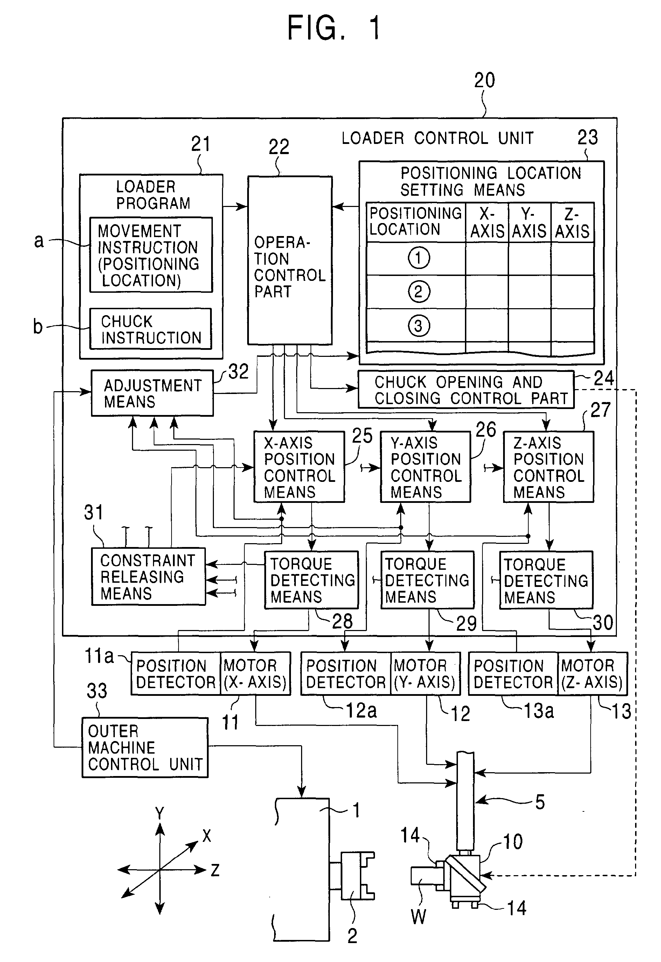

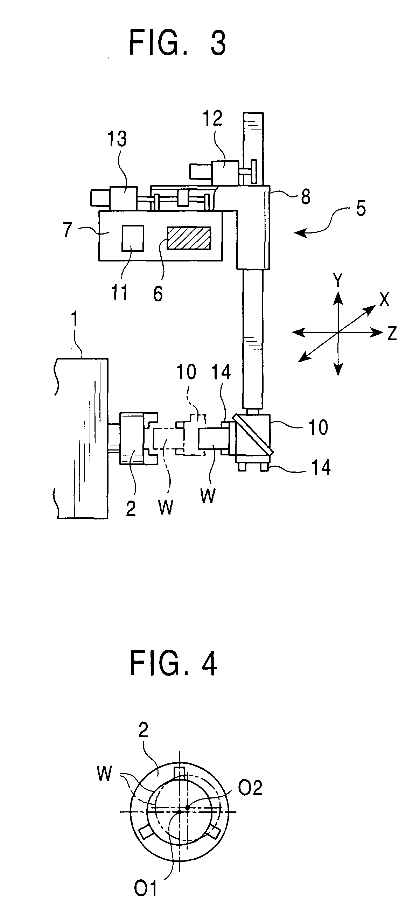

A loader 5 that is a gantry type is provided with a hoisting rod 9 in a travel base 7 traveling along an election rail 6 through a movable carriage 8 and a loader head 10 is provided in the lower end of the hoisting rod 9. As shown in Figure 3, two loader chucks 14 are provided in the loader head 10 in forward-looking and downward attitudes facing the main spindle chuck 2, and the positions of both chucks 14, 14 can be counterchangable. The traveling of the travel base 7 (the movement to the X-axis), the movement back and forth of the movable carriage 8 (the movement to the Z-axis) and the hoisting of the hoisting rod 9 (the movement to the Y-axis) are done by the drive of respective servomotors 11∼13 in Figure 1.

Figure 1 is a block diagram of the conceptual framework of the loader control unit. A loader control unit 20 is numeral control type by the computer, which a loader program 21 is executed in an operation control part 22 comprising CPU and the memory etc. and the operation of the loader 5 is controlled. Various sequence control commands etc. like a positioning command (a) that is a spindle movement command moving the loader head 10 to each position and a chuck command (b) which opens and closes the loader chuck 14 of the loader head 10 are described in the loader program 21. The operation control part 22 outputs the command corresponding to the respective movement command (a) to position control means 25∼27 comprising the servo controller etc. of each spindle (X∼Z axis) by decoding the loader program 21, and transmits the sequence control command like the chuck command a in the loader program 21 to each sequence control part (not shown in the drawings) of a chuck opening and closing control part 24 etc..

The above servomotors 11∼13 of each spindle are driven by the control of the position control means 25∼27 of each spindle. These servomotors 11∼13 have position detectors 11a∼13a like the pulse coder etc. and the position control means 25∼27 conducts the position feedback control by the detection value of the position detectors 11a∼13a. Torque detecting means 28∼30 are provided respectively in the drive systems of the servomotors 11∼13 of each spindle. These torque detecting means 28∼30 are composed of the ammeter etc. detecting the electric current supplied to the servomotors 11 ∼13 of each spindle.

The positioning command (a) in the loader program 21 describes the identification codes ①,②, ··· of the positioning location in this embodiment, and a positioning location setting means 23 memorizing the coordinate data of each spindle of these positioning location is provided. Each positioning location ①,②, ··· specifies the work passing position passing to the outer device chuck like each main spindle chuck 14 and reversing unit chucks 4a, 4b (Figure 2) to the loader chuck 14 and the position transferring from the loader 5 to the other conveying unit A (not shown in the drawings) like the work feeder and the conveyor, for example. The coordinate value of each positioning location ①,②, ··· in the positioning location setting means 23 is specified by the teaching by the proper method.

The loader control unit 20 in this embodiment is provided with a constraint releasing means 31 and an adjustment means 32 according to the above framework.

The constraint releasing means 31 is the means to control the loader 5 such as to release from the constraint condition by the X-axis and Y-axis servomotors 11, 12 before closing the chuck 2 of the outer device 1 completely after moving the loader chuck 14 to the work passing position. To be more precise, the constraint releasing means 31 checks the X-axis and Y-axis torques of the loader 5 in closing the chuck 2 of the outer device 1, and the loader 5 is released form the constraint condition by the servomotors 11, 12 if the generating torque exceeds the set value. The release from this constraint condition can be the torque limiting state, and the servo can be turned off in X-axis and Y-axis. Torque limiting can be added the torque control function to the servo controller comprising the position control means 25, 26, and the limit can be imposed through the proper torque limiter circuit (not shown in the drawings).

The adjustment means 32 detects the tracking movement position of the loader chuck 14 by the chuck 14 of the outer device 1 grabbing the work W in the state that the loader 5 is released from the constraint by the servomotors 11, 12 by the constraint releasing means 31, and the working passing position of the next cycle by the position control means 25, 26 is adjusted according to the tracking movement position. This adjustment is done by adjusting the coordinate value of the correspond positioning locations ①,②, ··· in the positioning location setting means 23. The data of the tracking movement position can be acquired from the position detection value of the position detectors 11a, 12a provided in the servomotors 11, 12 of each spindle. The timing to import the position detection value can be the timing of receiving the finish signal of the closing operation of the chuck 2 from an outer machine control unit 33 controlling the outer device 1, and can also be the prescribed lapsed time of the timer after the loader chuck 14 has reached the work passing position.

The operation of the above framework will be described. The loader 5 is positioned, by moving by the control of the loader control unit 20 to the positioning location ①,②, ··· specified by the teaching in advance. In each positioning location ①,②, ···, the transfer of the work W from the loader chuck 5 to the chuck 2, 4a, 4b of the outer device 1 is done. Then, the constraint releasing means 31 checks the X-axis and Y-axis torque of the loader 5, and the loader 5 is released from the constraint condition by the servomotors 11, 12 if the generating torque exceeds the set value before or when the chuck 2 of the outer device 1 is closed completely. The release from this constraint condition can be the torque limiting state, and the servomotors 11, 12 can also be turned off.

For example, as shown in the chain lines in Figure 3, the torque to the X-axis and the Y-axis directions becomes high in case that the loader chuck 14 is not positioned in the proper location as the gap state is shown in Figure 4 when the work W is grasped by both the main spindle chuck 2 and the loader chuck 14. In this state, the torque generated in the servomotors 11, 12 is limited or the servo is turned off. Even if the servo is turned off, the position loop system is in the control state. Since the torque going against the constraint condition is lost by turning off the servo, the servomotors 11, 12 of the loader 5 follow the other constraint force and the position is changed. Since the position control is not turned off, this position detection value is memorized and the positioning from the next cycle is decided to this position, so that the transfer in the proper position can always be available. To be more precise, the adjustment means 32 rewrites the coordinate data of the correspond positioning location ①,②, ··· in the positioning location setting means 23 by the coordinate data of the position detection value in the above following condition.

This loader control unit 20 releases the loader 5 from the constraint condition by the servomotors 11, 12 like this and makes the loader chuck 14 follow in the constraint condition by the chuck 2 of the outer device 1. Therefore, the abnormal operation and the transfer failure etc. of the loader 5 caused by the core gap of the chucks 2, 14 can be prevented from occurring. Moreover, this position is memorized and the positioning location from the next cycle is changed to the position, so that it can be always controlled to position to the suitable position.

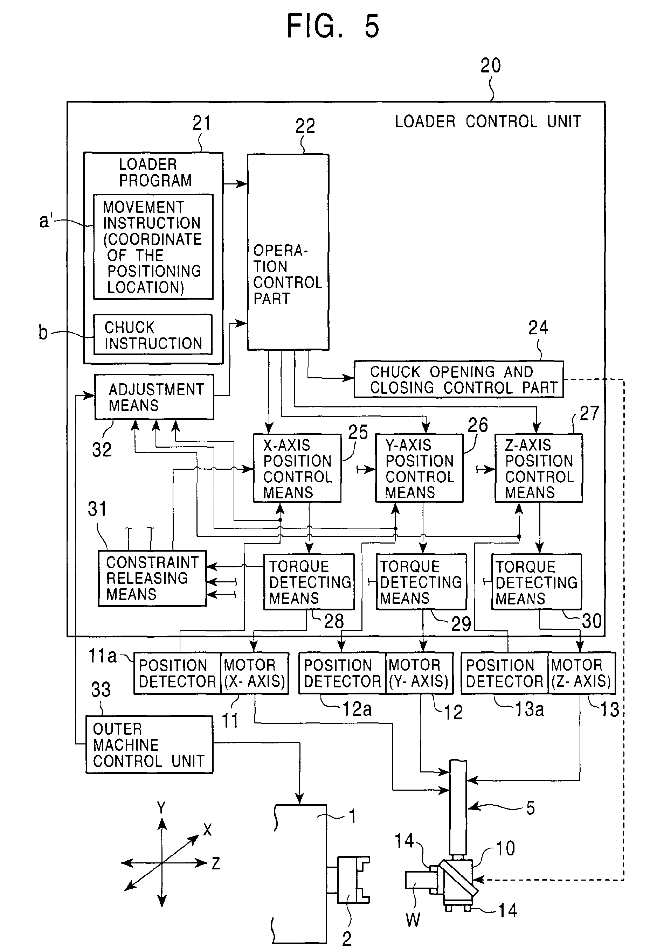

Additionally, the positioning location setting means 23 is provided in the above embodiment, however the coordinate value of the positioning location can be described in the movement instruction (a') of the loader program 21 without providing this means 23 as shown in Figure 5. In the case, the coordinate value of the movement command (a') is arranged to be corrected in the step that the movement command (a') of the loader program 21 is executed in the operation control part 22, for example.

The loader control unit of the present invention, that is the loader control unit that controls the loader passing the work to the chuck of the outer device, is provided with the position control means moving the loader chuck to the park passing position and the constraint releasing means which controls the loader such as to be released from the constraint condition by the motor before or after closing the chuck of the above outer device, so that the abnormal operation and the transfer failure etc. of the loader caused by the core gap of the chuck can be prevented to be occurred.

The loader chuck can be moved to the proper position in transferring the work from the next time in case that the loader chuck detects the tracking movement position by grabbing the work by the chuck of the above outer device in the state that the loader is released from the constraint by the motor by the above constraint releasing means and the adjustment means adjusting the work passing position of the next cycle by the above position control means is provided according to the tracking movement position.

The above loader is operated by the coordinate data of the working passing position specified by the loader program, which the adjustment of the work passing position can be done easily by changing the coordinate in case that the adjustment of the above work passing position is done by rewriting the above coordinate data or by adding the augmenter based on the detection value of the above tracking movement position.

## Claims

1. A loader control unit, controlling a loader which passes a work to a chuck of an outer device, is provided with a position control means moving a loader chuck to a work passing position and a constraint releasing means controlling the loader such as to be released from the constraint condition by a motor before or after closing the chuck of the above outer device after the loader chuck is moved to the above work passing position.

2. A loader control unit according to Claim 1, wherein the loader chuck detects a tracking movement position by that the chuck of the above outer device holds the work grasped by the loader chuck in the state that the loader is released from the constraint by the motor by the above constraint releasing means and an adjustment means adjusting the work passing position of the next cycle by the aforementioned position control means is provided according to the tracking movement position.

3. A loader control unit according to Claim 1 or Claim 2, wherein the above loader is operated by a coordinate data of the work passing position specified by a loader program, so that the adjustment of the above work passing position is done by rewriting the above coordinate data or by adding the augmenter.
